(19) Europäisches Patentamt

European Patent Office

Office européen des brevets

(11) **EP 1 489 822 A1**

(12) **EUROPEAN PATENT APPLICATION**
published in accordance with Art. 158(3) EPC

(43) Date of publication:
**22.12.2004 Bulletin 2004/52**

(51) Int Cl.7: **H04M 1/57**, H04M 1/00

(21) Application number: **03715384.8**

(22) Date of filing: **20.03.2003**

(86) International application number:
**PCT/JP2003/003411**

(87) International publication number:
**WO 2003/081881 (02.10.2003 Gazette 2003/40)**

(84) Designated Contracting States:
**AT BE BG CH CY CZ DE DK EE ES FI FR GB GR HU IE IT LI LU MC NL PT RO SE SI SK TR**

(30) Priority: **25.03.2002 JP 2002083129**

(71) Applicant: **MITSUBISHI DENKI KABUSHIKI KAISHA**
**Tokyo 100-8310 (JP)**

(72) Inventor: **MATSUTAKA, Yasushi**
**Mitsubishi Denki K. K.**
**Chiyoda-ku, Tokyo 100-8310 (JP)**

(74) Representative: **Sajda, Wolf E., Dipl.-Phys. et al**
**MEISSNER, BOLTE & PARTNER**
**Postfach 86 06 24**
**81633 München (DE)**

(54) **COMMUNICATION APPARATUS AND RECEPTION HISTORY DELETING METHOD**

(57) In a communication apparatus capable of storing an incoming-call history, the communication apparatus which has a function of deleting the incoming-call history is provided. A user is urged to input setting information for setting up control of the incoming-call history, through an operation part (6) and a display part (8). A call register control setting part / call register control part (11) judges whether the incoming-call history is to be deleted or left, based on the inputted setting information, stores the incoming-call history in a memory (5) for outgoing-call /incoming- call history, and further automatically deletes the incoming-call history whose caller's phone number was not referred to by the user, in the incoming-call histories referred to by the user.

Fig. 1

**Description**

TECHNICAL FIELD

The present invention relates to a communication apparatus, such as a cellular telephone, which has a phone book function and an incoming-call history display function. The present invention particularly relates to a solution to current problems: a problem of a single-ring trap call which leaves a caller's phone number in a call register in order to make a user call back the caller's phone number according to the call register, to be connected to a number, such as a dial Q2, which will charge the user a large amount of communication charge, or a problem of making a called party call back a caller who is unwilling to pay communication charge, so as to impose paying the communication charge on the called party though it is the caller side to have business to call.

BACKGROUND ART

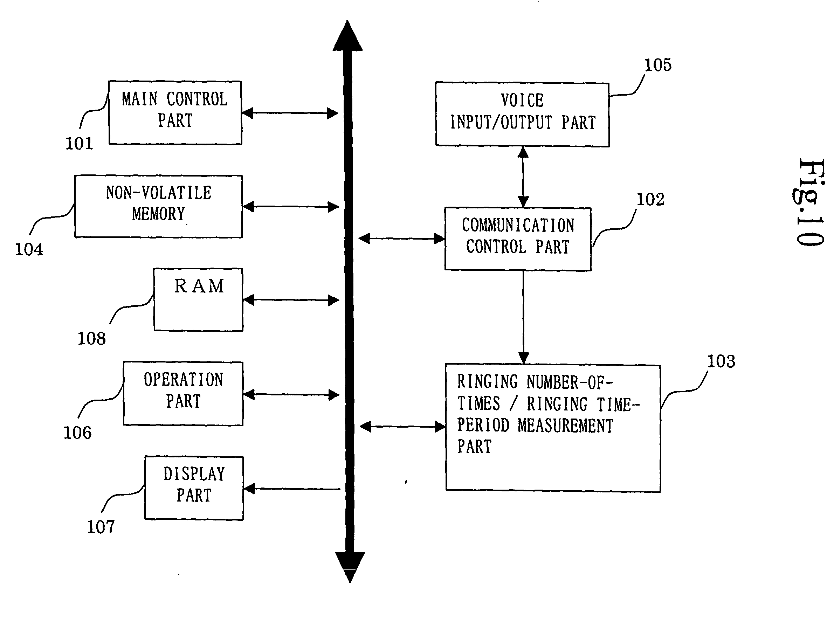

Fig. 10 shows an example of a structure of a conventional cellular phone based on the cellular phone described, for example, in Japanese Unexamined Patent Publication No. JP-A-2000-295 324.

Now, operations will be explained. The cellular phone shown in Fig. 10 has a ringing number-of-times measurement part or a ringing time-period measurement part, and measures a length from a reception of a call to a disconnection of the call. Its object is to show a cellular phone user how much a caller wanted to talk over the phone (how much the caller expected to talk over the phone), by displaying a caller's phone number and a ringing time period called by the caller to be corresponding each other in an incoming-call history. In the latest cellular phones, since a call sending operation can be easily performed for a caller's phone number displayed in the incoming-call history, the following problems can not be fully avoided by just displaying a ringing time period next to the incoming-call history a problem of a user's accidentally sending a call or unintentionally calling back a number left in the call register in order to know what it was.

In the display of the incoming-call history described in the conventional Japanese Unexamined Patent Publication No. JP-A-2000-295 324, a caller's phone number is surely displayed for a call which notifies the caller's phone number. Then, when displaying the incoming-call history, since a call sending operation can be easily performed for the number left in the call register, the user would accidentally send a call to the number.

In addition, if the number is left in the call register, there is a high possibility of performing a call sending operation in order to know what it was, because the user mentally becomes uneasy to worry whether it relates to business or not, or it is an important call from someone or not.

Consequently, there will be problems: a problem of being connected to a number, such as a dial Q2, which will charge the user a large amount of communication charge, or a problem of making a called party call back a caller who is unwilling to pay communication charge, so as to impose paying the communication charge on the called party though it is the caller side to have business to call.

It is an object of the present invention to provide an apparatus or a method for a user to easily select how to leave data in a call register. With regard to how to leave data in the call register, the present invention particularly allows a user of a cellular phone or a communication apparatus to set how to leave data in the call register based on an user's definition, for example, by setting the case in which a caller's phone number should be left in the call register or the case in which even the incoming -call history is not left in the call register.

DISCLOSURE OF THE INVENTION

A communication apparatus according to the present invention, which has a function of storing an incoming-call history of a received call in a call register memory, has a feature that the communication apparatus comprises:

a setting information memory for recording setting information for setting up control relating to the incoming-call history; and
a call register control part for controlling the incoming-call history stored in the call register memory, based on the setting information recorded in the setting information memory.

It is a feature that the setting information includes a deletion setting of indicating either one of deleting the incoming-call history and leaving the incoming-call history, and a caller's phone number setting of indicating whether to store a caller's phone number for specifying a caller in the call register memory, as the incoming-call history, and

the call register control part deletes the incoming-call history in the case it is set in the deletion setting to delete the incoming-call history, acquires the caller's phone number from the incoming-call history in the case it is set in the deletion setting to leave the incoming-call history,

stores the caller's phone number and time of call in the call register memory in the case it is set to leave the caller's phone number in the caller's phone number setting, and stores the time of call in the call register memory in the case it is set in the caller's phone number setting not to store the caller's phone number in the call register memory and in the case the caller's phone number can not be acquired.

It is a feature that the communication apparatus further comprises a phone book memory for registering a telephone number for specifying a communication party, and the call register control part judges if the caller's phone number has been registered in the phone book memory, and stores the caller's phone number and the time of call in the call register memory in the case the caller's phone number has been registered in the phone book memory.

It is a feature that the communication apparatus further comprises a phone book memory for registering a telephone number for specifying a communication party, and the call register control part judges if the caller's phone number has been registered in the phone book memory, stores the caller's phone number and the time of call in the call register memory in the case the caller's phone number has been registered in the phone book memory, and stores the caller's phone number and the time of call in the call register memory in the case the caller's phone number has not been registered in the phone book memory and in the case a ringing state continues for longer than a specific time period after incoming of the call.

It is a feature that the communication apparatus further comprises a phone book memory for registering a telephone number for specifying a communication party, and the call register control part judges if the caller's phone number has been registered in the phone book memory, and stores the caller's phone number and the time of call in the call register memory in the case the caller's phone number has been registered in the phone book memory and in the case a ringing state continues for longer than a specific time period after incoming of the call.

It is a feature that the communication apparatus further comprises a phone book memory for registering a telephone number for specifying a communication party, and a display part for acquiring the incoming-call history stored in the call register memory, displaying an acquired incoming-call history, in the case the caller's phone number included in the acquired incoming-call history has been registered in the phone book memory, displaying the caller's phone number and in the case the caller's phone number has not been registered in the phone book memory, not displaying the caller's phone number.

It is a feature that the display part receives an instruction to refer to the caller's phone number, and displays the incoming-call history including the caller's phone number based on a received instruction, for an incoming-call history whose caller's phone number is not displayed, in displayed incoming-call histories, and the call register control part extracts an incoming-call history for which the display part does not display a caller's phone number and did not receive the instruction to refer to the caller's phone number, and deletes an extracted incoming-call history from the call register memory.

It is a feature that the call register control part further includes a display part for acquiring the incoming-call history stored in the call register memory and displaying an acquired incoming-call history, and the call register control part examines the incoming-call history displayed by the display part, and deletes an examined incoming-call history from the call register memory based on the setting information.

An incoming-call history deletion method according to the present invention, executed by a communication apparatus which has a function of storing an incoming-call history of a received call in a call register memory, for deleting a stored incoming-call history from the call register memory, has a feature that the incoming-call history deletion method comprises:

recording setting information for setting up control relating to the incoming-call history in a setting information memory,
judging if the incoming-call history is to be stored, based on the setting information recorded in the setting information memory, and
deleting the incoming-call history from the call register memory, based on a judging result.

It is a feature that the recording the setting information in the setting information memory records, as the setting information, at least a deletion setting of indicating either one of deleting the incoming-call history and leaving the incoming-call history, and a caller's phone number setting of indicating whether to store a caller's phone number for specifying a caller, in the call register memory as the incoming-call history, and
the storing the incoming-call history in the call register memory deletes the incoming-call history in the case it is set in the deletion setting to delete the incoming-call history, acquires the caller's phone number from the call in the case it is set in the deletion setting to leave the incoming-call history, stores the caller's phone number and time of call in the call register memory in the case it is set to leave the caller's phone number in the caller's phone number setting, and stores the time of call in the call register memory in the case it is set in the caller's phone number setting not to store the caller's phone number in the call register memory and in the case the caller's phone number can not be acquired.

A communication apparatus according to the present invention has a feature that the communication apparatus comprises:

a call register memory for storing an incoming-call history including a telephone number of a received call,
a display part for displaying the incoming-call history stored in the call register memory,
a setting information memory for performing a control setting whether to store the telephone number of the received call on the display part as the incoming-call history, in the case a ringing time period of the received call is shorter than a specific setting time period, and

a call register control part for performing display control of the display part, based on the control setting stored in the setting information memory.

The communication apparatus according to the present invention has a feature that the communication apparatus comprises a phone book memory for registering a telephone number for specifying a communication party, and the setting information memory displays the telephone number on the display part as the incoming-call history when the telephone number of the received call has been stored in the phone book memory.

The communication apparatus according to the present invention has a feature that the communication apparatus comprises an operation part for starting a display function of the display part, and, when an incoming-call history whose telephone number is not displayed on the display part is specified by an operation of the operation part, out of incoming-call histories of received calls, the telephone number can be displayed on the displayed part.

A communication apparatus according to the present invention has a feature that the communication apparatus comprises:

a call register memory for storing an incoming-call history of a received call,

a setting information memory for performing a control setting whether to store a telephone number of the received call in the call register memory, in the case a ringing time period of the received call is shorter than a specific setting time period, and

a call register control part for storing the incoming-call history of the received call in the call register memory, based on the control setting stored in the setting information memory.

BRIEF DESCRIPTION OF THE DRAWINGS

Fig. 1 shows a block diagram of a structure of a cellular phone according to Embodiment 1 of the present invention;
Fig. 2 shows a processing flow relating to call register processing of the cellular phone according to Embodiment 1 of the present invention;
Fig. 3 shows a processing flow relating to call register processing of the cellular phone according to Embodiment 1 of the present invention;
Fig. 4 shows a processing flow relating to call register processing of the cellular phone according to Embodiment 1 of the present invention;
Fig. 5 shows a processing flow relating to call register processing of the cellular phone according to Embodiment 1 of the present invention;

Fig. 6 shows a processing flow relating to call register processing of the cellular phone according to Embodiment 1 of the present invention;
Fig. 7 shows changes of a display screen at the time of performing a call register control setup of the cellular phone according to Embodiment 1 of the present invention;
Fig. 8 shows a call register display screen of the cellular phone according to Embodiment 1 of the present invention;
Fig. 9 shows a call register display screen of the cellular phone according to Embodiment 1 of the present invention; and
Fig. 10 is a block diagram showing an example of a structure of a conventional cellular phone based on an invention of the prior art of Japanese Unexamined Patent Publication No. JP-A-2000-295 324.

BEST MODE FOR CARRYING OUT THE INVENTION

Embodiment 1.

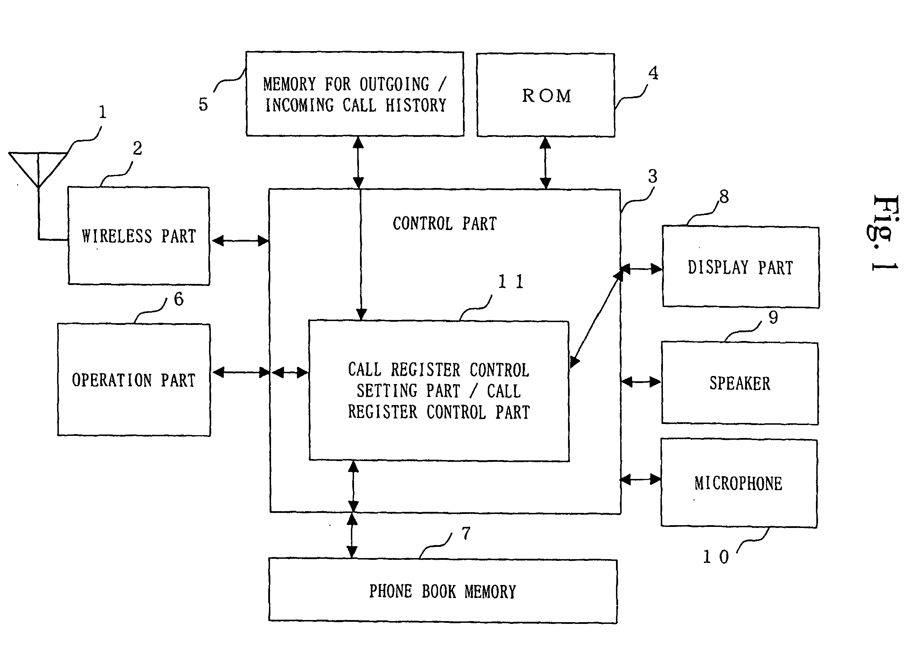

Fig. 1 is a block diagram showing a structure of a cellular phone relating to the present invention. A cellular phone will be described as an example. In Fig. 1, 1 denotes an antenna for transmitting and receiving a wireless signal, 2 denotes a wireless part for performing modulation/demodulation and data conversion at the time of reception and transmission, 3 denotes a control part for controlling each part of the cellular phone or performing transmission, reception, analysis, etc. of a message to/from a communication party, 4 denotes a ROM (Read Only Memory) storing various programs for controlling each part, and 5 denotes a memory (call register memory) for storing an outgoing-call history, an incoming-call history etc. of the cellular phone. 6 denotes an operation part for a user to start various functions of the cellular phone, 7 denotes a phone book memory (phone book) for storing phone book data, such as a name, a telephone number, an address, and an e-mail address, 8 denotes a display part for displaying information, states, etc., such as functions driven by operations of the operation part 6, etc., and 9 denotes a speaker for outputting a speech etc. and 10 denotes a microphone for inputting a speech. 11 denotes a call register control setting part / call register control part, which is a part of the control part 3, for performing a control being a core of the present idea. It is acceptable that a memory for the phone book memory 7 is also for the memory 5 for storing an outgoing-call history, an incoming-call history, etc. of the cellular phone.

The call register control setting part / call register control part 11 can be divided in two functions: a call register control setting part for setting up control information on saving /displaying etc. of an incoming-call history, and a call register control part for executing processing, such as saving/deleting of an incoming-call history generated depending upon a received call, based on the setting information (control information) which has been set up. The setting information (control information) is stored in the memory in the cellular phone (for example, a memory in the control part 3 or the memory for outgoing-call / incoming-call history). A memory (recording area) for recording the setting information (control information) can be called a setting information memory or a control information memory.

Although the two functions of the call register control setting part and the call register control part are collectively displayed in Fig. 1 as one structure element, it is also acceptable to arrange the two parts as separate structure elements.

Now, operations will be explained. Incidentally, "to leave $\times \times \times$" has the same meaning as "to save $\times \times$ ", and indicates to store (record) $\times \times \times$ in the memory.

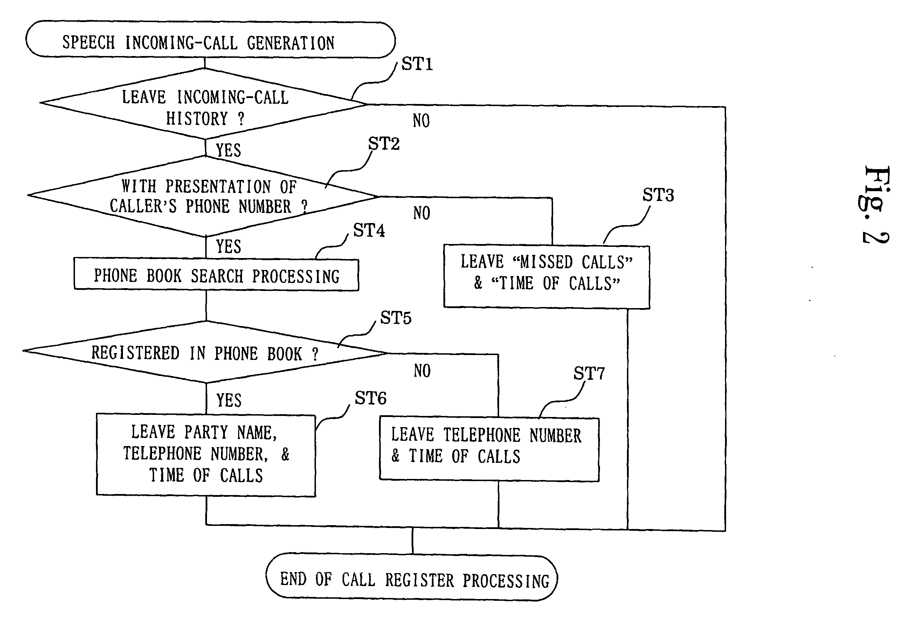

Fig. 2 shows a processing flow at the time of a call incoming into a cellular phone. Each processing shown in Fig. 2 is executed by the call register control setting part / call register control part 11.

It is judged which of "to leave" or "not to leave" a call history in the call register is set up as a setting of the cellular phone (ST1). When "not to leave" (NO at ST1) is set up, processing relating to the call register is ended with leaving nothing in the call register. When "to leave" (YES at ST1) is set up, it is checked whether the incoming call is with "presentation of a caller's phone number" or not (ST2). The incoming call with "presentation of a caller's phone number" indicates the case that the number (telephone number) of a caller is notified ".

When there is no "presentation of a caller's phone number" (NO at ST2), "missed calls" and "time of calls" are registered in the call register (ST3), and the processing relating to the call register is ended. When there is "presentation of caller's phone number" (YES at ST2), "phone book search" of checking whether the same number as the "caller's phone number" is registered in the "phone book" is performed (ST4). As a result of the "phone book search", when there is no coincident number (NO at ST5), the "telephone number" in the "caller's phone number" and the "time of calls" are registered in the call register, and the processing relating to the call register is ended (ST7). When there is a coincident number (YES at ST5), "the party name registered in the phone book", "telephone number", and "time of calls" are registered in the call register, and the processing relating to the call register is ended (ST6).

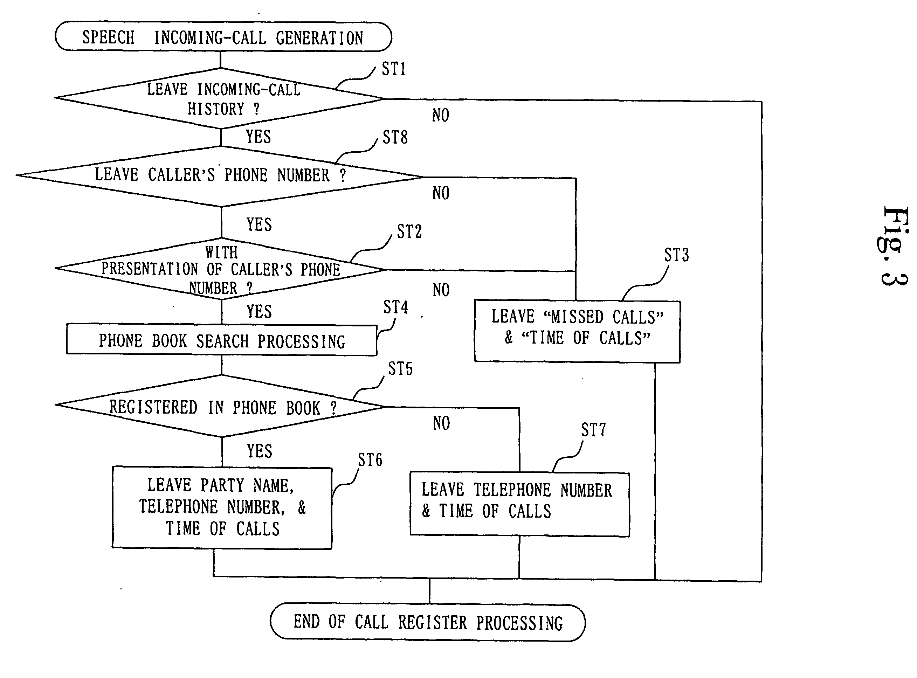

Next, an example of operations where another processing is added to processing of Fig. 2 will be explained with reference to Figs. 3 through 6. In Figs. 3 through 6, processing with the same step number as that in Fig. 2 indicates the same processing as explained in Fig. 2. Moreover, the processing in Figs. 3 through 6 is executed by the call register control setting part / call register control part 11.

Fig. 3 shows a processing flowchart in which processing of ST8 is added to the processing flow of Fig. 2 to be between the processing change from ST1 to ST2. As another setting in the cellular phone, the processing ST8 of checking whether the setting is to leave a "caller's phone number" or not is added. After checking whether the setting is to leave a "caller's phone number" (ST8), when the setting is not to leave a "caller's phone number" (NO at ST8), only "missed calls" and "time of calls" are set in the call register, and the processing is ended (ST3). When the setting is to leave a "caller's phone number" (YES at ST8), the same processing as those after ST2 of Fig. 2 is performed.

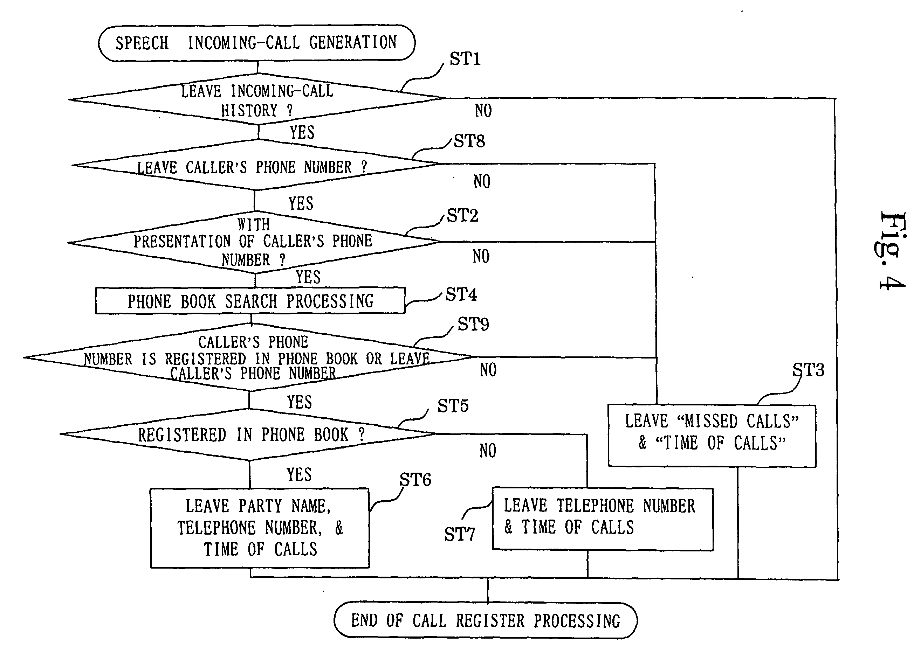

Fig. 4 shows a processing flowchart in which processing of ST9 is added to the processing flow of Fig. 3 to be after the "phone book search processing" of ST4.

As another setting for the call register in the cellular phone, the processing ST9 of checking whether a caller's phone number is registered in the phone book memory or whether the setting is to leave a caller's phone number is added. Regarding the "caller's phone number" which is not registered in the "phone book", it is checked whether the setting is to leave a "telephone number" in the call register (ST9). Regarding the "caller's phone number" which is not registered in the "phone book", when the setting is not to leave a "telephone number" in the call register (NO at ST9), only "missed calls" and "time of calls" are set in the call register and then the processing is ended. (ST3). In the case of the caller's phone number being registered in the "phone book" or in the case that the "caller's phone number" is not registered in the "phone book" but the setting is to leave the caller's phone number in the call register (YES at ST9), the processing is the same as those after the processing ST5 which follows the "phone book search processing" (ST4) of Fig. 3. The "missed calls" and "time of calls" are left in the call register as the processing in the case of NO at ST9 (ST3). However, it is also acceptable not to leave the incoming-call history, as a setting of the cellular phone.

In the processing of ST9, the phone book search processing (ST4) is executed at ST4, and it is judged whether the caller's phone number is registered in the phone book or not.

In the case of the caller's phone number being registered in the phone book, it becomes YES at ST9. In the case of the caller's phone number not being registered in the phone book, as explained above, it is judged at ST9 based on the setting (setting information) whether the caller's phone number is to be left or not.

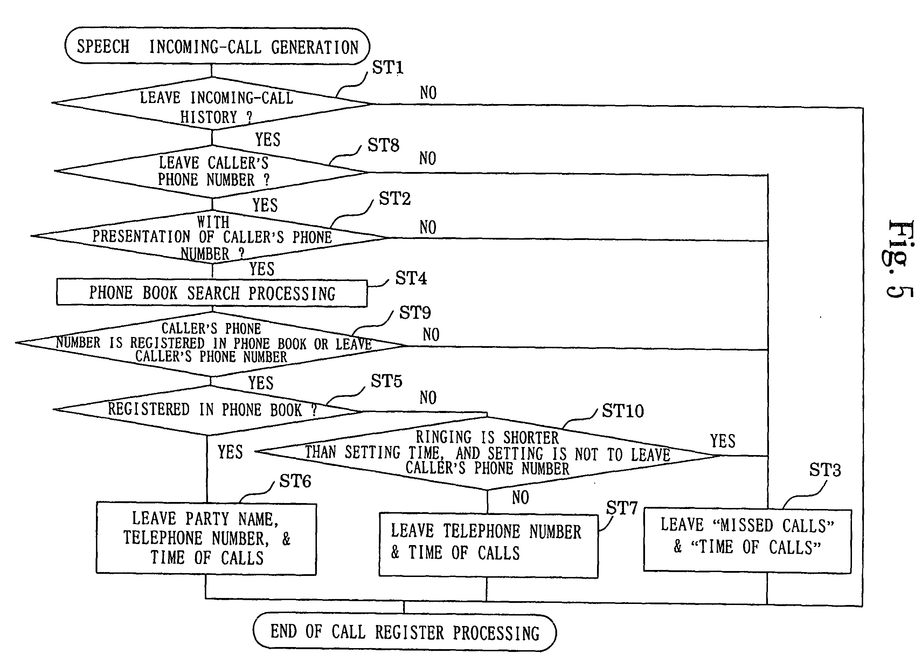

Fig. 5 shows a processing flowchart in which processing of ST10 is added to the processing flow of Fig. 4 to be between the processing change from ST5 to ST7.

As another setting in the cellular phone, the processing performed in the case that a ringing time period is shorter than the setting time period and the cellular phone user does not answer the incoming call in the state of "ringing" is set up (ST10). As this setting, when the setting is set up of not leaving a "telephone number" in the call register (YES at ST10) in the case that the ringing time period is shorter than the setting time period, only "missed calls" and "time of calls" are set in the call register and the processing is ended. The processing performed in the case that the "ringing time period" is longer than the setting time period and the cellular phone user does not answer the incoming call (NO at ST10) in the state of "ringing" is described as ST7 of Fig. 4.

The state of "ringing" is obtained by measuring a time from receiving a "call setting request message" from a communications network to receiving a "disconnection message" from the communications network and the state of "ringing" is compared with the "setting time period" set in advance in the cellular phone. The "missed calls" and "time of calls" are left in the call register as the processing of ST3. However, it is also possible to leave nothing in the call register, as a setting in the cellular phone.

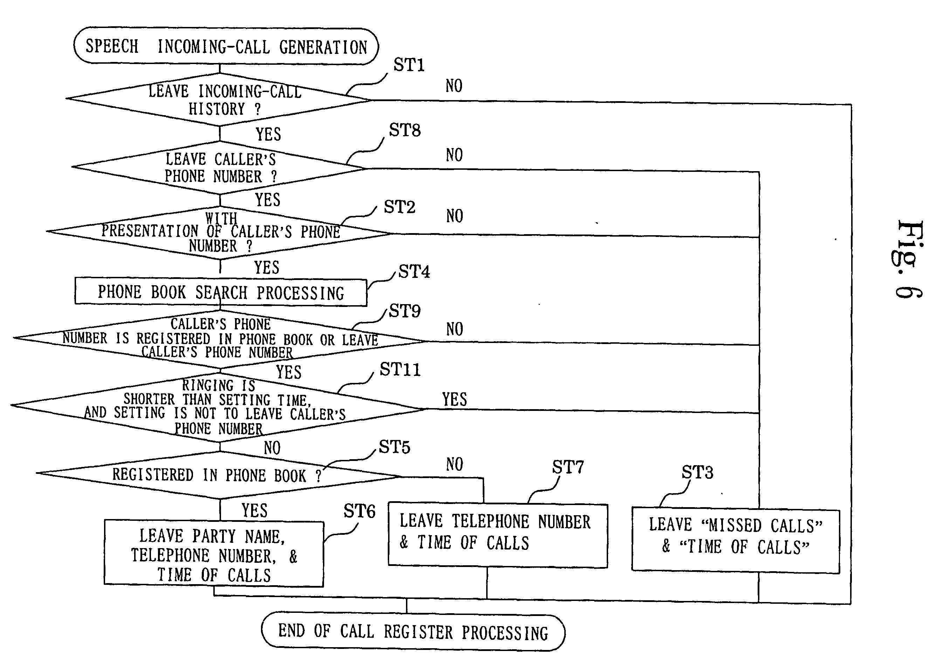

Fig. 6 shows a processing flowchart in which processing of ST11 is added to the processing flow of Fig. 4 to be between the processing change from ST9 to ST5 .

As another setting in the cellular phone, the processing (ST11) of checking whether the setting is set up of not leaving the "caller's phone number" in the call register when a ringing time period is shorter than the setting time period and the cellular phone user does not answer the incoming call in the state of "ringing" is added. In the case that the setting is set up of not leaving "caller's phone number" in the call register when a ringing time period is shorter than the setting time period and the cellular phone user does not answer the incoming call in the state of "ringing" (YES at ST11), only "missed calls" and "time of calls" are set up in the call register and the processing is ended. In the case that a ringing time period is longer than the setting time period and the cellular phone user does not answer the incoming call in the state of "ringing", or in the case that leaving the "caller's phone number" in the call register is set up (NO at ST11), it goes to the processing of ST5. The processing performed in the case that a ringing time period is longer than the setting time period and the cellular phone user does not answer the incoming call in the state of "ringing" (NO at ST11) is the same as the processing after ST5 of Fig. 4. The "missed calls" and "time of calls" are left in the call register as the processing of YES at ST11 (ST3). However, it is also possible not to leave an incoming-call history as a setting of the cellular phone.

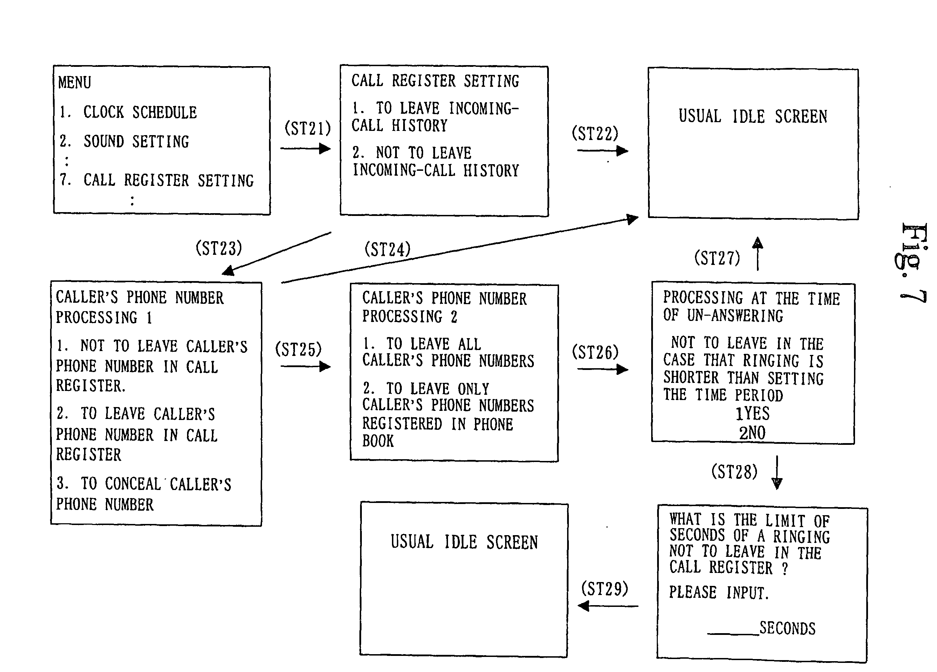

Fig. 7 shows an example of screen changes at the time of performing a setting in the cellular phone in order to realize each processing shown in Figs. 2 through 6. Each setting of the cellular phone is performed by the operation part 6 and the display part 8 of Fig. 1. Setting information (control information) inputted by the user through the operation part 6 and the display part 8 is stored in the memory in the cellular phone, by the function belonging to the call register control setting part of the call register control setting part / call register control part 11. The stored setting information (control information) is used for the case of saving/deleting an incoming-call history, by the function belonging to the call register control part of the call register control setting part / call register control part 11.

Correlation between the setting information (control information) to be set up in Fig. 7 and the operations explained with reference to Figs. 2 through 6 is as follows:

(1) "a call register setting" of Fig. 7 is used in the processing of ST1.

In the case of selecting "1. to leave incoming-call history" : YES at ST1
In the case of selecting "2. not to leave incoming-call history" : NO at ST1

(2) "caller's phone number processing 1" of Fig. 7 is used in the processing of ST8.

"1. not to leave a caller's phone number in a call register": NO at ST8.
"2. to leave a caller's phone number in a call register": YES at ST8.
"3. to conceal a caller's phone number": corresponds to the execution of processing of

ST8 → SS5 → ST7.

(3) "caller's phone number processing 2" of Fig. 7 is used in the processing of ST9.

"1. to leave all caller's phone numbers": YES at ST9 (YES unconditionally)
"2. to leave only caller's phone numbers left in a phone book": NO if it does not

correspond to the above 1 at ST9.
(4) "processing at the time of un-answering : not to leave in the case that a ringing is shorter than the setting time period" and "What is the limit of seconds of a ringing not to leave in the call register? " of Fig. 7 are used at ST10 of Fig. 5 and at ST11 of Fig. 6.

"YES": YES at ST10 of Fig. 5, YES at ST11 of Fig. 6.
"NO": NO at ST10 of Fig. 5, NO at ST11 of Fig. 6.

First, the menu screen of the cellular phone is displayed and "7. call register setting" in the menu is selected (ST21). Then, in the displayed "call register setting" screen, if "2. Not to leave incoming-call history" is selected (ST22), it goes to a usual idle screen. In the screen of "call register setting", when "1. to leave incoming-call history" is selected (ST23), the next "caller's phone number processing 1" screen is displayed. In the "caller's phone number processing 1", when "1. not to leave caller's phone number in call register" is selected (ST24) , it goes to a usual idle screen. In the "caller's phone number processing 1", when "2. to leave caller's phone number in call register" or "3. to conceal caller's phone number" is selected (ST25), the next "caller's phone number processing 2" screen is displayed. In the "caller's phone number processing 2", when either one of "1. to leave all caller's phone numbers" or "2.to leave only caller's phone numbers registered in phone book" is selected (ST26), "processing at the time of un-answering" screen is displayed. In the "processing at the time of un-answering", when "2. NO" is selected (ST27) for the display of "not to leave in the case that a ringing is shorter than setting time period", it goes back to a usual idle screen. If "1. YES" is selected (ST28), the next "What is the limit of seconds of a ringing not to leave in the call register?" is displayed. Then, when time is input (ST29), it goes to a usual idle screen.

In the "caller's phone number processing 1" of Fig. 7, when "3. to conceal a caller's phone number" is selected (ST25), selection processing of "to leave caller's phone number" (ST8) in Figs. 3 through 6 goes to "YES" unconditionally.

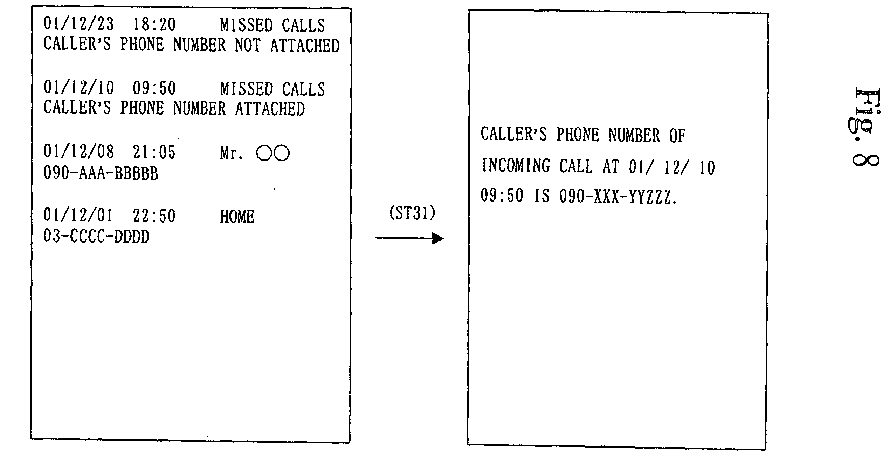

Next, in the "registered in phone book" (ST5) of Fig. 3, Fig. 4, and Fig. 6, it goes to "NO". Then, in the processing of "leave telephone number and time of calls" (ST7), the caller's phone number is also left (recorded). In the case of leaving the caller's phone number, when the call register is displayed, it is set not to directly display a "caller's phone number" but to display "caller's phone number attached" as shown in Fig. 8. Information is left in the call register so that "caller's phone number attached" is displayed for a caller's phone number when the display part 8 displays the incoming-call history.

In the case of the processing flow of Fig. 5, at the "registered in the phone book" (ST5), it goes to "NO". At the judgement of "ringing longer than setting time period" (ST12), it goes to YES. Similarly, at the processing of "leave telephone number and time of calls", it is set not to directly display a "caller's phone number" but to display "caller's phone number attached" as shown in Fig. 8 when displaying the incoming-call history.

At the time of displaying the incoming-call history, when the user selects the "caller's phone number attached" for a history displayed with "caller's phone number attached" as shown in Fig. 8, an actual "caller's phone number" is displayed (ST31).

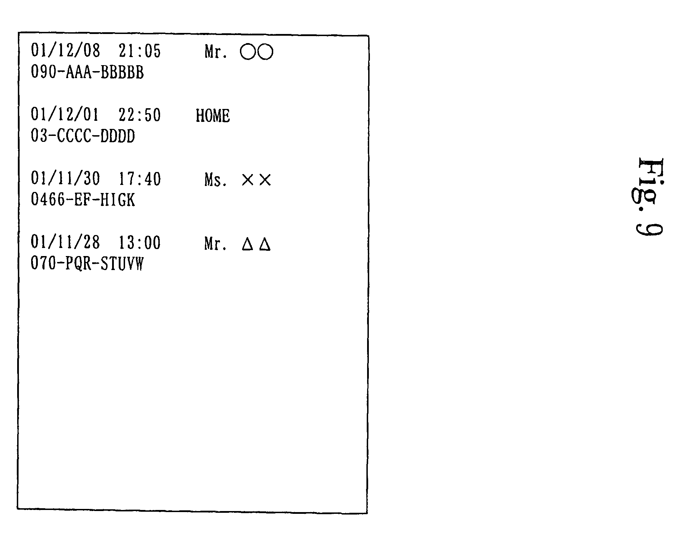

When the incoming-call history as shown in Fig. 8 is displayed by the operation of the cellular phone user, and the user moves a cursor and checks the contents of the incoming-call history from the top in order, even in a case of no caller's phone number being displayed for the first incoming-call history of "caller's phone number not attached" and for the second incoming-call history of "missed calls", "time of calls", and "caller's phone number attached", at the time of closing the screen of the incoming-call history, the first and the second incoming-call histories are automatically deleted from the call register. Then, at the time of displaying the screen of the incoming-call history next time, the incoming-call history as shown in Fig. 9 is displayed.

In the example of Fig. 9, after the screen of the incoming-call history has been displayed once, an incoming-call history whose setting is not to store a caller's phone number is automatically deleted. The call register control setting part / call register control part 11 executes processing to delete. The call register control setting part / call register control part 11 receives a notification of the incoming-call history having been displayed, from the display part 8, and deletes an incoming-call history based on the received notification.

In the present Embodiment, have been described the cellular phone and the communication apparatus, having the phone book function and the function of the call register, in which it is possible to set up leaving or not leaving an incoming-call history in the call register, concerning any incoming calls, as a setting of the cellular phone or the communication apparatus.

Furthermore, the cellular phone and the communication apparatus have been described in which it is possible to set up displaying only "missed calls" and "time of calls" in the case of "leaving an incoming call history" being set up.

Furthermore, the cellular phone and the communication apparatus have been described in which the following can be set up in the case of "leaving an incoming call history" being set up:

displaying a caller's phone number, time of calls, and information related in the phone book in the incoming-call history, only for an incoming call whose caller's phone number is notified and has been registered in the phone book; and displaying only "missed calls" and "time of calls", or leaving nothing in the call register, for an incoming call whose caller's phone number is notified but has not been registered in the phone book, as the same treatment as that of no presentation of the caller's phone number.

Furthermore, the cellular phone and the communication apparatus have been described in which the following can be set up in the case of "leaving an incoming call" being set up:

displaying a caller's phone number, time of calls, and information related in the phone book in the incoming-call history, only for an incoming call whose caller's phone number is notified and has been registered in the phone book;

displaying a caller's phone number for an incoming call whose caller's phone number is notified but has not been registered in the phone book and whose time period, from the call incoming to the call being terminated because of the caller's giving up, is equal to or longer than a specific time period; and displaying only "missed calls" and "time of calls", or leaving nothing in the call register, for an incoming call whose caller's phone number is notified but has not been registered in the phone book and whose time period, from the call incoming to the call being terminated because of the caller's giving up, is equal to or shorter than the specific time period, as the same treatment as that of no presentation of the caller's phone number even though the caller's phone number is notified.

Furthermore, the cellular phone and the communication apparatus have been described in which the following can be set up in the case of "leaving an incoming call" being set up:

displaying a caller's phone number for an incoming call whose caller's phone number is notified and has been registered in the phone book and whose time period, from the call incoming to the call being terminated because of the caller's giving up, is equal to or longer than a specific time period; and displaying only "missed calls" and "time of calls", or leaving nothing in the call register, relating to an incoming call whose caller's phone number is notified and has been registered in the phone book and whose time period, from the call incoming to the call being terminated because of the caller's giving up, is equal to or shorter than the specific time period, as the same treatment as that of no presentation of the caller's phone number. even though the caller's phone number is notified.

Furthermore, the cellular phone and the communication apparatus have been described in which the following can be set up in the case of "leaving an incoming call" being set up:

displaying a caller's phone number, time of calls, and information related in the phone book in the incoming-call history, only for an incoming call whose caller's phone number is notified and has been registered in the phone book; and displaying "missed calls", "time of calls", and "caller's phone number attached" in the call register, and not displaying the caller's phone number until the user performs an operation for displaying the caller's phone number, for an incoming call whose caller's phone number is notified but has not been registered in the phone book.

Furthermore, the cellular phone and the communication apparatus have been described in which the following can be set up in the case of "leaving an incoming call" being set up:

displaying a caller's phone number, time of calls, and information related in the phone book in the incoming-call history, only for an incoming call whose caller's phone number is notified and has been registered in the phone book; and displaying "missed calls", "time of calls", "caller's phone number attached" in the call register, and automatically deleting the information on the incoming call, from the call register when the user performs an operation for not displaying the caller's phone number, for an incoming call whose caller's phone number is notified but has not been registered in the phone book.

Furthermore, have been described the cellular phone and the communication apparatus in which it is possible to set up automatically deleting information on the incoming call, from the call register when the user checks the incoming-call history, for an incoming call whose caller's phone number is notified but is not presented in the incoming-call history, or an incoming call originally without the caller's phone number attached.

Embodiment 2.

In the Embodiment above-mentioned, the case where an incoming-call history is deleted at the time of the call incoming or the incoming-call history being displayed, based on information set up beforehand has been explained.

The information set up on the setting screen of Fig. 7 can be an example of the information set up beforehand, and it is also acceptable to use information other than the information displayed on Fig. 7. For example, setting information of deleting all at a specific time of the day or deleting all which have been left in the call register more than a specific days can be used. The information set up on the setting screen of Fig. 7 is an example of the information set up beforehand, and it is also acceptable to use information other than the information displayed on Fig. 7.

Embodiment 3.

In the above-mentioned Embodiments 1 and 2, a cellular phone is used as an example of a communication apparatus (communication terminal), for describing explanations. However, it is not restricted to this. Any communication apparatus (communication terminal) having a function of storing an incoming-call history can also be used instead of the cellular phone.

Industrial Applicability

In the communication apparatus (cellular phone or communication equipment) and the communication method according to the present invention, it is possible to execute processing for an incoming call at the time of the call incoming, by a user's setting up of setting information which defines a control relating to an incoming call, in the cellular phone and the communication apparatus. Then, based on such setting and processing, it is possible to create a call register according to the necessity of the user of the cellular phone and the communication apparatus.

Moreover, by dint of setting the setting information, it is possible for the user of the cellular phone and the communication apparatus to prevent and control to carelessly call the number displayed on the incoming-call history resulting in the user's being charged communication charge. Accordingly, it is possible to take measures against evil incoming calls.

Moreover, relating to an incoming call with no presentation of a caller's phone number, an incoming call whose caller's phone number is not displayed in the incoming-call history according to the intention of the user of the cellular phone of the communication apparatus, and an incoming call whose caller's phone number is not displayed according to the setting of displaying a caller's phone number by the operation of the user of the cellular phone of the communication apparatus, since such incoming calls have no use value if they are left, by way of deleting them at the time of the user's confirming their incoming and of leaving only incoming calls with a presentation of a caller's phone number and having use value to be redialed based on the incoming-call history, it is possible to effectively utilize the limited memory secured for the incoming-call history.

Moreover, according to the communication apparatus (portable terminal or communication equipment) and the communication method of the present invention, since it is possible to delete an incoming-call history, execution of an unnecessary reply based on the incoming-call history can be prevented.

Moreover, it is possible to control a call register based on setting information (control information). Being provided with a screen on which setting information (control information) can be easily changed, a user can flexibly change a saving situation of a call register.

Moreover, by saving an incoming-call history based on telephone numbers registered in the phone book, an unnecessary incoming-call history can be automatically deleted .

Moreover, by setting a continuation time period of a call ringing state in advance, it is possible to control a call register based on whether or not the call ringing state continues longer than a specific time period since the call incoming.

By setting up not to display a caller's phone number when displaying an incoming-call history and by automatically deleting the incoming-call history when the user does not refer to the caller's phone number, it is possible to save the time and effort for deleting an unnecessary incoming call history and to prevent execution of an unnecessary reply.

Furthermore, by judging whether a caller's phone number is to be displayed or not based on telephone numbers registered in the phone book when displaying an incoming-call history, it is possible to distinctively display an incoming-call history which has a high possibility of being needed by the user, and by automatically deleting the incoming-call history when the user does not refer to the caller's phone number, it is possible to save the time and effort relating to the incoming-call history and to prevent execution of an unnecessary reply.

**Claims**

1. A communication apparatus which has a function of storing an incoming-call history of a received call in a call register memory, comprising:

   a setting information memory for recording setting information for setting up control relating to the incoming-call history; and
   a call register control part for controlling the incoming-call history stored in the call register memory, based on the setting information recorded in the setting information memory.

2. The communication apparatus of claim 1, wherein the setting information includes a deletion setting of indicating either one of deleting the incoming-call history and leaving the incoming-call history, and a caller's phone number setting of indicating whether to store a caller's phone number for specifying a caller in the call register memory, as the incoming-call history, and the call register control part deletes the incoming-call history in the case it is set in the deletion setting to delete the incoming-call history, acquires the caller's phone number from the incoming-call history in the case it is set in the deletion setting to leave the incoming-call history, stores the caller's phone number and time of call in the call register memory in the case it is set to leave the caller's phone number in the caller's phone number setting, and stores the time of call in the call register memory in the case it is set in the caller's phone number setting not to store the caller's phone number in the call register memory and in the case the caller's phone number can not be acquired.

3. The communication apparatus of claim 2, further comprising:

a phone book memory for registering a telephone number for specifying a communication party, and

wherein the call register control part judges if the caller's phone number has been registered in the phone book memory, and stores the caller's phone number and the time of call in the call register memory in the case the caller's phone number has been registered in the phone book memory.

4. The communication apparatus of claim 2, further comprising:

a phone book memory for registering a telephone number for specifying a communication party, and

wherein the call register control part judges if the caller's phone number has been registered in the phone book memory, stores the caller's phone number and the time of call in the call register memory in the case the caller's phone number has been registered in the phone book memory, and stores the caller's phone number and the time of call in the call register memory in the case the caller's phone number has not been registered in the phone book memory and in the case a ringing state continues for longer than a specific time period after incoming of the call.

5. The communication apparatus of claim 3, further comprising:

a phone book memory for registering a telephone number for specifying a communication party, and

wherein the call register control part judges if the caller's phone number has been registered in the phone book memory, and stores the caller's phone number and the time of call in the call register memory in the case the caller's phone number has been registered in the phone book memory and in the case a ringing state continues for longer than a specific time period after incoming of the call.

6. The communication apparatus of claim 2, further comprising:

a phone book memory for registering a telephone number for specifying a communication party, and
a display part for acquiring the incoming-call history stored in the call register memory, displaying an acquired incoming-call history, in the case the caller's phone number included in the acquired incoming-call history has been registered in the phone book memory, displaying the caller's phone number and in the case the caller's phone number has not been registered in the phone book memory, not displaying the caller's phone number.

7. The communication apparatus of the claim 6, wherein, for an incoming-call history whose caller's phone number is not displayed, in displayed incoming-call histories, the display part receives an instruction to refer to the caller's phone number, and displays the incoming-call history including the caller's phone number based on a received instruction, and

the call register control part extracts an incoming-call history for which the display part does not display a caller's phone number and did not receive the instruction to refer to the caller's phone number, and deletes an extracted incoming-call history from the call register memory.

8. The communication apparatus of claim 2, wherein the call register control part further includes a display part for acquiring the incoming-call history stored in the call register memory and displaying an acquired incoming-call history, and

the call register control part examines the incoming-call history displayed by the display part, and deletes an examined incoming-call history from the call register memory based on the setting information.

9. An incoming-call history deletion method executed by a communication apparatus which has a function of storing an incoming-call history of a received call in a call register memory, for deleting a stored incoming-call history from the call register memory, comprising:

recording setting information for setting up control relating to the incoming-call history in a setting information memory,
judging if the incoming-call history is to be stored, based on the setting information recorded in the setting information memory, and
deleting the incoming-call history from the call register memory, based on a judging result.

10. The incoming-call history deletion method of claim 9,
the recording the setting information in the setting information memory records, as the setting information, at least a deletion setting of indicating either one of deleting the incoming-call history and leaving the incoming-call history, and a caller's phone number setting of indicating whether to store a caller's phone number for specifying a caller, in the call register memory as the incoming-call history, and

the storing the incoming-call history in the call register memory deletes the incoming-call history in the case it is set in the deletion setting to delete the incoming-call history, acquires the caller's phone number from the call in the case it is set in the deletion setting to leave the incoming-call history, stores the caller's phone number and time of call in the call register memory in the case it is set to leave the caller's phone number in the caller's phone number setting, and stores the time of call in the call register memory in the case it is set in the caller's phone number setting not to store the caller's phone number in the call register memory and in the case the caller's phone number can not be acquired.

**11.** A communication apparatus comprising

a call register memory for storing an incoming-call history including a telephone number of a received call,

a display part for displaying the incoming-call history stored in the call register memory,

a setting information memory for performing a control setting whether to store the telephone number of the received call on the display part as the incoming-call history, in the case a ringing time period of the received call is shorter than a specific setting time period, and

a call register control part for performing display control of the display part, based on the control setting stored in the setting information memory.

**12.** The communication apparatus of claim 11, comprising

a phone book memory for registering a telephone number for specifying a communication party, and

wherein the setting information memory displays the telephone number on the display part as the incoming-call history when the telephone number of the received call has been stored in the phone book memory.

**13.** The communication apparatus of claim 11, comprising

an operation part for starting a display function of the display part, and

wherein, when an incoming-call history whose telephone number is not displayed on the display part is specified by an operation of the operation part, out of incoming-call histories of received calls, the telephone number can be displayed on the displayed part.

**14.** A communication apparatus comprising

a call register memory for storing an incoming-call history of a received call,

a setting information memory for performing a control setting whether to store a telephone number of the received call in the call register memory, in the case a ringing time period of the received call is shorter than a specific setting time period, and

a call register control part for storing the incoming-call history of the received call in the call register memory, based on the control setting stored in the setting information memory.

EP 1 489 822 A1

# Fig. 1

12

EP 1 489 822 A1

Fig. 2

```
              ┌────────────────────────────────────────┐
              │    SPEECH INCOMING-CALL GENERATION     │
              └────────────────────────────────────────┘
                              │                    ST1
                      ◇───────────────◇
                     ╱  LEAVE INCOMING-CALL ╲────────── NO ──────────┐
                     ╲     HISTORY ?        ╱                        │
                      ◇───────────────◇                             │
                              │ YES                ST2              │
                      ◇───────────────◇                             │
                     ╱  WITH PRESENTATION OF ╲──── NO ──────┐       │
                     ╲ CALLER'S PHONE NUMBER ?╱             │       │
                      ◇───────────────◇          ST3        │       │
                              │ YES        ST4   ┌──────────────────┐│
              ┌────────────────────────┐         │ LEAVE "MISSED CALLS"││
              │ PHONE BOOK SEARCH PROCESSING │   │  & "TIME OF CALLS"  ││
              └────────────────────────┘         └──────────────────┘│
                              │           ST5                         │
                      ◇───────────────◇                             │
                     ╱  REGISTERED IN PHONE BOOK ? ╲── NO ──┐        │
                      ◇───────────────◇          ST7        │        │
                              │ YES    ST6     ┌──────────────────┐  │
              ┌──────────────────────┐         │ LEAVE TELEPHONE NUMBER│  │
              │ LEAVE PARTY NAME,    │         │  & TIME OF CALLS     │  │
              │ TELEPHONE NUMBER, &  │         └──────────────────┘  │
              │ TIME OF CALLS        │                               │
              └──────────────────────┘                               │
                              │                                      │
                              └──────────┬───────────────────────────┘
                          ┌────────────────────────────────┐
                          │  END OF CALL REGISTER PROCESSING │
                          └────────────────────────────────┘
```

Fig. 3

EP 1 489 822 A1

```
        ( SPEECH  INCOMING-CALL GENERATION )
                        │
                        ▼                          ST1
              < LEAVE INCOMING-CALL >──── NO ──────────┐
                   HISTORY ?                           │
                        │ YES          ST8             │
                        ▼                              │
              < LEAVE CALLER'S PHONE NUMBER ? >── NO ──┤
                        │ YES          ST2             │
                        ▼                              │
              <     WITH                  >── NO ──┐   │
              < PRESENTATION OF CALLER'S PHONE >   │   │
              <      NUMBER ? >                    │   │
                        │ YES          ST4         │   │
                        ▼                      ST3 │   │
              [ PHONE BOOK SEARCH PROCESSING ]     │   │
                        │              ST5         ▼   │
                        ▼               [ LEAVE "MISSED CALLS" ]
              < REGISTERED IN PHONE BOOK ? >── NO   [ & "TIME OF CALLS" ]
                        │ YES                 │         │
                        ▼         ST6     ST7 ▼         │
              [ LEAVE PARTY NAME,   ] [ LEAVE TELEPHONE NUMBER ]
              [ TELEPHONE NUMBER, & ] [ & TIME OF CALLS        ]
              [ TIME OF CALLS       ]
                        │               │             │
                        └───────┬───────┘             │
                                ▼                      │
              ( END OF CALL REGISTER PROCESSING )◄─────┘
```

# Fig. 4

SPEECH INCOMING-CALL GENERATION

ST1 — LEAVE INCOMING-CALL HISTORY ? — YES / NO

ST8 — LEAVE CALLER'S PHONE NUMBER ? — YES / NO

ST2 — WITH PRESENTATION OF CALLER'S PHONE NUMBER ? — YES / NO

ST4 — PHONE BOOK SEARCH PROCESSING

ST9 — CALLER'S PHONE NUMBER IS REGISTERED IN PHONE BOOK OR LEAVE CALLER'S PHONE NUMBER — YES / NO

ST5 — REGISTERED IN PHONE BOOK ? — YES / NO

ST6 — LEAVE PARTY NAME, TELEPHONE NUMBER, & TIME OF CALLS

ST7 — LEAVE TELEPHONE NUMBER & TIME OF CALLS

ST3 — LEAVE "MISSED CALLS" & "TIME OF CALLS"

END OF CALL REGISTER PROCESSING

# Fig. 5

SPEECH  INCOMING-CALL GENERATION

ST1 — LEAVE INCOMING-CALL HISTORY ? — NO / YES

ST8 — LEAVE CALLER'S PHONE NUMBER ? — NO / YES

ST2 — WITH PRESENTATION OF CALLER'S PHONE NUMBER ? — NO / YES

ST4 — PHONE BOOK SEARCH PROCESSING

ST9 — CALLER'S PHONE NUMBER IS REGISTERED IN PHONE BOOK OR LEAVE CALLER'S PHONE NUMBER — NO / YES

ST5 — REGISTERED IN PHONE BOOK ? — NO / YES

ST10 — RINGING IS SHORTER THAN SETTING TIME, AND SETTING IS NOT TO LEAVE CALLER'S PHONE NUMBER — YES / NO

ST6 — LEAVE PARTY NAME, TELEPHONE NUMBER, & TIME OF CALLS

ST7 — LEAVE TELEPHONE NUMBER & TIME OF CALLS

ST3 — LEAVE "MISSED CALLS" & "TIME OF CALLS"

END OF CALL REGISTER PROCESSING

# Fig. 6

SPEECH INCOMING-CALL GENERATION

ST1 LEAVE INCOMING-CALL HISTORY ? — YES / NO

ST8 LEAVE CALLER'S PHONE NUMBER ? — YES / NO

ST2 WITH PRESENTATION OF CALLER'S PHONE NUMBER ? — YES / NO

ST4 PHONE BOOK SEARCH PROCESSING

ST9 CALLER'S PHONE NUMBER IS REGISTERED IN PHONE BOOK OR LEAVE CALLER'S PHONE NUMBER — YES / NO

ST11 RINGING IS SHORTER THAN SETTING TIME, AND SETTING IS NOT TO LEAVE CALLER'S PHONE NUMBER — YES / NO

ST5 REGISTERED IN PHONE BOOK ? — YES / NO

ST6 LEAVE PARTY NAME, TELEPHONE NUMBER, & TIME OF CALLS

ST7 LEAVE TELEPHONE NUMBER & TIME OF CALLS

ST3 LEAVE "MISSED CALLS" & "TIME OF CALLS"

END OF CALL REGISTER PROCESSING

MENU

1. CLOCK SCHEDULE

2. SOUND SETTING
   :
7. CALL REGISTER SETTING
       :

(ST21) →

CALL REGISTER SETTING

1. TO LEAVE INCOMING-CALL HISTORY

2. NOT TO LEAVE INCOMING-CALL HISTORY

(ST22) →

USUAL IDLE SCREEN

(ST23)

(ST24)

(ST27) ↑

CALLER'S PHONE NUMBER PROCESSING 1

1. NOT TO LEAVE CALLER'S PHONE NUMBER IN CALL REGISTER.

2. TO LEAVE CALLER'S PHONE NUMBER IN CALL REGISTER

3. TO CONCEAL CALLER'S PHONE NUMBER

(ST25) →

CALLER'S PHONE NUMBER PROCESSING 2

1. TO LEAVE ALL CALLER'S PHONE NUMBERS

2. TO LEAVE ONLY CALLER'S PHONE NUMBERS REGISTERED IN PHONE BOOK

(ST26) →

PROCESSING AT THE TIME OF UN-ANSWERING

NOT TO LEAVE IN THE CASE THAT RINGING IS SHORTER THAN SETTING THE TIME PERIOD
1YES
2NO

(ST28) ↓

USUAL IDLE SCREEN

(ST29) ←

WHAT IS THE LIMIT OF SECONDS OF A RINGING NOT TO LEAVE IN THE CALL REGISTER ?

PLEASE INPUT.

_____SECONDS

Fig. 7

EP 1 489 822 A1

18

EP 1 489 822 A1

Fig. 8

01/12/23  18:20      MISSED CALLS
CALLER'S PHONE NUMBER NOT ATTACHED

01/12/10  09:50      MISSED CALLS
CALLER'S PHONE NUMBER ATTACHED

01/12/08  21:05      Mr. ◯◯
090-AAA-BBBBB

01/12/01  22:50      HOME
03-CCCC-DDDD

(ST31) →

CALLER'S PHONE NUMBER OF
INCOMING CALL AT 01/ 12/ 10
09:50 IS 090-XXX-YYZZZ.

# Fig. 9

```
01/12/08  21:05    Mr.  ○○
090-AAA-BBBBB

01/12/01  22:50    HOME
03-CCCC-DDDD

01/11/30  17:40    Ms.  ××
0466-EF-HIGK

01/11/28  13:00    Mr.  △△
070-PQR-STUVW
```

# Fig.10

VOICE INPUT/OUTPUT PART — 105

COMMUNICATION CONTROL PART — 102

RINGING NUMBER-OF-TIMES / RINGING TIME-PERIOD MEASUREMENT PART — 103

MAIN CONTROL PART — 101

NON-VOLATILE MEMORY — 104

RAM — 108

OPERATION PART — 106

DISPLAY PART — 107

## INTERNATIONAL SEARCH REPORT

| | |
|---|---|
| International application No. | PCT/JP03/03411 |

| A. CLASSIFICATION OF SUBJECT MATTER |
|---|
| Int.Cl$^7$ H04M1/57, H04M1/00 |
| According to International Patent Classification (IPC) or to both national classification and IPC |

| B. FIELDS SEARCHED |
|---|
| Minimum documentation searched (classification system followed by classification symbols) |
| Int.Cl$^7$ H04M1/00, H04M1/24-1/62, H04M1/66-1/82 |

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>A | JP. 2000-32116 A (Nakayo Telecommunications Inc.),<br>28 January, 2000 (28.01.00),<br>Full text; all drawings<br>(Family: none) | 1-6,8-12,14<br>7,13 |
| X<br><br>A | JP 2001-111658 A (Denso Corp.),<br>20 April, 2001 (20.04.01),<br>Full text; all drawings<br>(Family: none) | 1-3,6,8-10,<br>12,13<br>4,5,7,11,14 |
| P,X | JP 2002-125012 A (NEC Corp.),<br>26 April, 2002 (26.04.02),<br>Full text; all drawings<br>& US 2002/0045466 A1 | 1-14 |

| ☐ Further documents are listed in the continuation of Box C. | ☐ See patent family annex. |
|---|---|

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 26 May, 2003 (26.05.03) | 10 June, 2003 (10.06.03) |

| Name and mailing address of the ISA/ | Authorized officer |
|---|---|
| Japanese Patent Office | |
| Facsimile No. | Telephone No. |

Form PCT/ISA/210 (second sheet) (July 1998)